# EUROPÄISCHE PATENTSCHRIFT

(11) **EP 2 757 628 B1**
(45) Veröffentlichungstag und Bekanntmachung des Hinweises auf die Patenterteilung: **05.07.2017**
(21) Anmeldenummer: 13194386.2
(22) Anmeldetag: 26.11.2013
(51) Int. Cl.: H01M 10/625, H01M 10/6556, H01M 10/6568, B60L 11/18, H01M 10/613, H01M 10/615, H01M 10/658

(54) **Kühlsystem mit einem kühlmitteldurchströmten Kühlkörper zur Kühlung einer Batterie**
Refrigeration system having a cooling body with coolant flowing through it for cooling a battery
Système de refroidissement comprenant un refroidisseur traversé par un réfrigérant pour le refroidissement d'une batterie

(30) Priorität: 18.01.2013 DE 102013200790
(43) Veröffentlichungstag der Anmeldung: 23.07.2014
(73) Patentinhaber: ROBERT BOSCH GMBH, 70442 Stuttgart (DE); Samsung SDI Co., Ltd., Yongin-si Gyeonggi-do 446-577 (KR)
(72) Erfinder: Yan, Xiaofeng, 71384 Weinstadt (DE)
(74) Vertreter: Bee, Joachim

(56) Entgegenhaltungen:
- DE-A1- 3 930 530
- DE-A1-102008 059 969
- DE-U- 1 968 891
- US-A- 3 110 633
- US-A- 5 611 392

## Beschreibung

Die Erfindung betrifft ein Kühlsystem mit wenigstens einem kühlmitteldurchströmten Kühlkörper zur Kühlung einer Batterie, insbesondere zur Kühlung einer als Energiequelle für den Antrieb von Hybrid-, Plug-In-Hybrid- oder Elektrofahrzeugen ausgebildeten Batterie, und mit weiteren kühlmitteldurchströmten Komponenten umfassend wenigstens eine Leitung zum Zuführen von Kühlmittel zu dem wenigstens einen Kühlkörper und wenigstens eine Leitung zum Abführen von Kühlmittel von dem wenigstens einen Kühlkörper.

### Stand der Technik

Batterien, wie insbesondere Lithium-Ionen-Batterien, sind als Energiespeicher von großer Bedeutung, insbesondere als nachladbare Energiequelle in Hybrid-, Plug-In-Hybrid- oder Elektrofahrzeugen. Lithium-Ionen-Batterien sind, wie andere Batterietypen auch, üblicherweise aus einem oder mehreren Batteriemodulen aufgebaut, wobei mehrere Batteriezellen zu einem Batteriemodul verschaltet sind. Für einen sicheren Betrieb solcher Batterien sowie für eine insbesondere hinsichtlich der Performance und der Lebensdauer optimierte Nutzung solcher Batterien muss sichergestellt werden, dass die Batterien nur in einem bestimmten Temperaturbereich betrieben werden. So muss insbesondere bei hoher Leistungsaufnahme oder hoher Leistungsabgabe ein Aufheizen der Batteriezellen über eine bestimmte Temperatur hinaus vermieden werden, insbesondere um die Lebensdauer der Batteriezellen nicht zu verkürzen und um ein sogenanntes thermisches Durchgehen (auch "thermal runaway" genannt) der Batteriezellen zu vermeiden. Darüber hinaus kann es erforderlich sein, die Batteriezellen zu erwärmen, beispielsweise bei Unterschreitung einer bestimmten Außentemperatur bei Einsatz solcher Batterien in Fahrzeugen.

Aus diesem Grund werden zur Temperierung der Batterien Kühlsysteme der eingangs genannten Art eingesetzt. Die zu kühlende Batterie beziehungsweise die Batteriezellen der Batterie sind dabei üblicherweise an oder auf dem wenigstens einen kühlmitteldurchströmten Kühlkörper angeordnet, sodass eine Übertragung thermischer Energie zwischen dem Kühlkörper und der Batterie beziehungsweise den Batteriezellen erfolgen kann. In der Regel sind die Kühlkörper aus gut wärmeleitenden Metallen, beispielsweise aus Aluminium, ausgebildet. Die Verwendung der Bezeichnungen "Kühlsystem" sowie "Kühlmittel" ist vorliegend nicht auf die Funktion des Kühlens einer Batterie beziehungsweise der Batteriezellen der Batterie beschränkt sondern umfasst allgemein die Funktion des Temperierens einer Batterie, also insbesondere auch das Zuführen von Wärme, um die Batterie bei einer niedrigen Umgebungstemperatur in eine bevorzugte Betriebstemperatur zu überführen.

Bei der Temperierung von Batterien beziehungsweise Batteriezellen mittels eingangs genannter Kühlsysteme besteht das Problem, dass an Komponenten des Kühlsystems, wie insbesondere den Anschlussverbindungen von Leitungen des Kühlsystems oder an den Leitungen selbst Undichtigkeiten auftreten können. Ursachen hierfür können beispielsweise Materialalterung oder äußere Belastungen, wie Vibrationen oder Stöße, sein. Diese Undichtigkeiten führen zu einem Austritt von Kühlmittel, welches die Batterie sowie weitere umliegende elektronische Komponenten in Folge von Korrosion und/oder Kurzschlussbildung beschädigen kann. Zur Verbesserung der Dichtigkeit von Kühlmittelförderschläuchen ist aus der Druckschrift DE 691 31 054 T2 und der Druckschrift DE 11 2006 000 552 T5 bekannt, Kühlmittelförderschläuche mit Innenschläuchen auszurüsten. Ferner ist aus der Druckschrift DE 10 2008 062 158 A1 bekannt, eine Batterie mit einer Umhüllung zum Schutz vor Feuchtigkeit zu umgeben.

Darüber hinaus besteht bei der Temperierung von Batterien das Problem der Kondenswasserbildung. Kondenswasser entsteht an den Leitungen des Kühlsystems insbesondere dann, wenn die Oberflächentemperatur an den Leitungen den sogenannten Taupunkt unterschreitet. Das Kondenswasser kann dabei ebenso wie austretendes Kühlmittel die Batterie sowie weitere umliegende elektronische Komponenten in Folge von Korrosion und/oder Kurzschlussbildung beschädigen.

Vor diesem Hintergrund ist es eine Aufgabe der vorliegenden Erfindung, ein Kühlsystem der eingangs genannten Art so zu verbessern, dass Batterien sowie periphere elektronische Komponenten besser vor aus dem Kühlsystem austretenden Kühlmittel und/oder sich an den Komponenten des Kühlsystems gebildetem Kondenswasser geschützt sind.

### Offenbarung der Erfindung

Zur Lösung der Aufgabe wird ein Kühlsystem mit wenigstens einem kühlmitteldurchströmten Kühlkörper zur Kühlung einer Batterie, insbesondere zur Kühlung einer als Energiequelle für den Antrieb von Hybrid-, Plug-In-Hybrid- oder Elektrofahrzeugen ausgebildeten Batterie, und mit weiteren kühlmitteldurchströmten Komponenten umfassend wenigstens eine Leitung zum Zuführen von Kühlmittel zu dem wenigstens einen Kühlkörper und wenigstens eine Leitung zum Abführen von Kühlmittel von dem wenigstens einen Kühlkörper, vorgeschlagen, wobei wenigstens ein Teil der weiteren kühlmitteldurchströmten Komponenten zumindest teilweise von wenigstens einem Hüllelement umgeben ist, derart, dass zwischen dem wenigstens einen Hüllelement und dem wenigstens einen Teil der weiteren kühlmitteldurchströmten Komponenten ein geschlossener Volumenraum gebildet ist. Neben der wenigstens einen Leitung zum Zuführen von Kühlmittel zu dem wenigstens einen Kühlkörper und der wenigstens einen Leitung zum Abführen von Kühlmittel von dem wenigstens einen Kühlkörper können insbesondere Verbindungsstücke von Leitungen, Sammelbehälter, Anschlussstutzen oder Verteileinrichtungen weitere kühlmitteldurchströmte Komponenten des Kühlsystems sein. Die wenigstens eine Leitung zum Zuführen von Kühlmittel zu dem wenigstens einen Kühlkörper und/oder die wenigstens eine Leitung zum Abführen von Kühlmittel von dem wenigstens einen Kühlkörper können insbesondere jeweils als flexible Schlauchleitung oder als metallisches Rohr oder als Kombination von flexiblen Schlauchleitungen und metallischen Rohren ausgebildet sein. Das wenigstens eine Hüllelement ist vorteilhafterweise flüssigkeitsundurchlässig ausgebildet, das heißt, dass keine Flüssigkeit, insbesondere kein flüssiges Kühlmittel und kein Kondenswasser, aus dem wenigstens einen Hüllelement austreten kann. An den Stellen, an denen das wenigstens eine Hüllelement unmittelbar mit Komponenten des Kühlsystems verbunden ist, sind geeignete Abdichtmittel vorgesehen, beispielsweise im Stand der Technik bekannte Dichtungsringe, welche ein Austreten von Flüssigkeit an diesen Stellen verhindern. Das wenigstens eine Hüllelement ist vorteilhafterweise flexibel ausgebildet und besteht aus einer Kunststofffolie. Eine solche Kunststofffolie umfasst vorteilhafterweise mehrere Kunststoffschichten, wobei die Kunststoffschichten vorzugsweise unterschiedliche Materialeigenschaften aufweisen, sodass das wenigstens eine Hüllelement vorteilhafterweise flexibel, reißfest und/oder flüssigkeitsundurchlässig ausgebildet ist. Bevorzugt sind die weiteren kühlmitteldurchströmten Komponenten des Kühlsystems von einem einzigen Hüllelement umgeben, wobei das Hüllelement vorzugsweise entsprechend den Verzweigungen des Kühlsystems verzweigt ist, insbesondere derart, dass das Hüllelement zumindest in grober Näherung äquidistant von den umhüllten Komponenten beabstandet ist, vorteilhafterweise mit einem Abstand von nicht weniger als 0,5 cm und nicht mehr als 15 cm.
Der vorliegenden Erfindung liegt die Erkenntnis zugrunde, dass ein Kühlsystem mit einer erfindungsgemäßen Umhüllung von kühlmitteldurchströmten Komponenten des Kühlsystems, insbesondere einer Umhüllung solcher Komponenten, die nahe der zu kühlenden Batterie bzw. der zu kühlenden Batteriezellen und/oder weiterer peripherer elektronischer Komponenten angeordnet sind, eine zu temperierende Batterie sowie periphere elektronische Komponenten effektiv und preisgünstig vor Schäden durch austretendes Kühlmittel und/oder vor an Komponenten des Kühlsystems gebildeten Kondenswasser schützt. Diese Schutzfunktion wird durch die nachfolgend genannten weiteren Merkmale einzeln oder in Kombination vorteilhafterweise weiter verbessert.

Eine vorteilhafte Ausgestaltung des Kühlsystems sieht vor, dass die wenigstens eine Leitung zum Zuführen von Kühlmittel zu dem wenigstens einen Kühlkörper und/oder die wenigstens eine Leitung zum Abführen von Kühlmittel von dem wenigstens einen Kühlkörper zumindest abschnittsweise von dem wenigstens einen Hüllelement umgeben ist. Da diese Komponenten des Kühlsystems üblicherweise in unmittelbarer Nähe zu der Batterie angeordnet sind, ist insbesondere die Batterie verbessert vor austretendem Kühlmittel im Falle von Undichtigkeiten sowie vor an den Leitungen gebildetem Kondenswasser geschützt. Insbesondere ist vorgesehen, dass ein Abschnitt einer Leitung beginnend von der Anbindung an den Kühlkörper von einem Hüllelement umgeben ist.

Gemäß einer weiteren vorteilhaften Ausgestaltung der Erfindung ist das wenigstens eine Hüllelement thermisch isolierend ausgebildet. Hierzu kann das Hüllelement beispielsweise aus einer wärmeisolierenden Kunststofffolie ausgebildet sein. Vorzugsweise weist das Hüllelement dabei eine Wärme reflektierende Außen- und/oder Innenschicht auf. Diese Wärme reflektierende Schicht kann beispielsweise auf das wenigstens eine Hüllelement aufgedampft sein. Vorteilhafterweise reduziert ein thermisch isolierend ausgebildetes Hüllelement bezüglich der von dem Hüllelement umgebenden Komponenten eine Erwärmung von dem wenigstens einen Kühlkörper zuzuführenden Kühlmittel und eine Wärmeabgabe von von dem wenigstens einen Kühlkörper abzuführenden Kühlmittel. Darüber hinaus reduziert ein thermisch isolierend ausgebildetes Hüllelement vorteilhafterweise eine Kondenswasserbildung an den von dem Hüllelement umgebenden Komponenten.

Gemäß einer weiteren vorteilhaften Ausgestaltung der Erfindung weist das wenigstens eine Hüllelement wenigstens eine Ablassöffnung zum Ablassen von innerhalb des Volumenraumes befindlicher Flüssigkeit auf. Die Ablassöffnung weist gemäß einer vorteilhaften Ausgestaltung jeweils einen schlauchartigen Fortsatz auf, über welchen Flüssigkeit gezielt aus dem Volumenraum abgeführt werden kann, insbesondere derart, dass ein Kontakt der abgeführten Flüssigkeit mit der Batterie und weiteren elektronischen Komponenten ausgeschlossen ist. Vorteilhafterweise ist die wenigstens eine Ablassöffnung als Ventil ausgebildet, welches geöffnet und geschlossen werden kann. Das geschlossene Ventil verhindert dabei ein Austreten von Flüssigkeit, insbesondere von Kondenswasser und/oder Kühlmittel, aus dem durch das Hüllelement gebildeten Volumenraum, sodass sich die Flüssigkeit in dem Volumenraum ansammelt. Durch ein Öffnen des Ventils kann die angesammelte Flüssigkeit aus dem Volumenraum abgeführt werden.

Gemäß einer weiteren vorteilhaften Ausgestaltung der Erfindung weist das wenigstens eine Hüllelement wenigstens ein Mittel zur Detektion von Feuchtigkeit innerhalb des Volumenraumes auf. Vorzugsweise ist das Mittel zur Detektion von Feuchtigkeit ein Feuchtesensor. Der Feuchtesensor kann dabei vorteilhafterweise derart ausgebildet sein, dass ein elektrischer Kontakt geschlossen wird, wenn sich Feuchtigkeit auf dem Sensor niederschlägt. Durch das Schließen des elektrischen Kontaktes wird dabei vorteilhafterweise das Vorhandensein von Feuchtigkeit signalisiert. Vorzugsweise ist das wenigstens eine Mittel zur Detektion von Feuchtigkeit ausgebildet zu signalisieren, dass ein Ablassen von Flüssigkeit aus dem Volumenraum erforderlich ist und/oder dass das Kühlsystem eine Undichtigkeit aufweist.

Eine weitere Ausgestaltung der Erfindung sieht vor, dass das wenigstens eine Hüllelement ein Innengerüst aufweist, welches das Hüllelement von dem von dem Hüllelement umgebenen Teil der weiteren kühlmitteldurchströmten Komponenten beabstandet. Das Innengerüst ist dabei vorzugsweise derart ausgebildet und derart mit dem Hüllelement verbunden, dass das Innengerüst durch das Beabstanden des Hüllelementes von dem einen Teil der weiteren kühlmitteldurchströmten Komponenten, die von dem Hüllelement umgeben werden, quasi den Volumenraum aufspannt. Das Innengerüst weist vorzugsweise radial an der kühlmitteldurchströmten Komponente angeordnete Querstreben auf, wobei das eine Ende einer Querstrebe an der kühlmitteldurchströmten Komponente angeordnet ist und das andere Ende einer Querstrebe an dem Hüllelement angeordnet ist. Vorteilhafterweise verhindert das Innengerüst, dass das Hüllelement ungewollt an Komponenten des Kühlsystems anhaftet und das Hüllelement somit in seiner Wirkung, insbesondere in seiner Isolationswirkung, beeinträchtigt ist.

Eine bevorzugte Ausgestaltung der Erfindung sieht vor, dass das wenigstens eine Hüllelement gasdicht ausgebildet ist, derart, dass das wenigstens eine Hüllelement mit Gas befüllbar ist, wobei das mit Gas befüllte wenigstens eine Hüllelement von dem wenigstens einen Teil der weiteren Kühlmitteldurchströmten Komponenten beabstandet ist. Durch ein in das wenigstens eine Hüllelement eingebrachtes Gas wird dabei quasi der Volumenraum zwischen dem Hüllelement und den von dem Hüllelement umgebenen kühlmitteldurchströmten Komponenten des Kühlsystems aufgespannt. Vorzugsweise ist das Gas zur Befüllung des Hüllelementes Luft. Vorteilhafterweise verbessert das Gas die Isolationswirkung des wenigstens einen Hüllelementes, sodass eine Wärmeabgabe von Kühlmittel abführenden Komponenten und eine Wärmeaufnahme von Kühlmittel zuführenden Komponenten weiter reduziert wird. Durch die Isolationswirkung wird zudem die Bildung von Kondenswasser vorteilhafterweise weiter reduziert. Darüber hinaus lässt sich bei einer Befüllung des wenigstens einen Hüllelementes mit einem Gas vorteilhafterweise feststellen, ob Undichtigkeiten in der Hülle existieren. Gemäß einer vorteilhaften Ausgestaltung ist die Ablassöffnung des Hüllelementes derart ausgebildet, dass über die Ablassöffnung eine Befüllung des Hüllelementes mit Gas erfolgen kann. In einer Ausgestaltungsvariante weist das Hüllelement eine Befüllöffnung auf, welche derart ausgebildet ist, dass das Hüllelement über die Befüllöffnung mit einem Gas befüllt und die Befüllöffnung im Anschluss an eine Befüllung des Hüllelementes mit Gas gasdicht verschlossen werden kann.

Eine weitere vorteilhafte Ausgestaltung der Erfindung sieht vor, dass das wenigstens eine Hüllelement zumindest teilweise transparent ausgebildet ist, derart, dass der wenigstens eine von dem wenigstens einen Hüllelement umgebene Teil der weiteren kühlmitteldurchströmten Komponenten zumindest teilweise sichtbar ist. Durch eine derartige Ausgestaltung lassen sich vorteilhafterweise Sichtkontrollen durchführen, insbesondere dahingehend, ob im Bereich von Verbindungsstellen des Kühlsystems Leitungen korrekt angeordnet sind und/oder ob das Kühlsystem Undichtigkeiten an den kühlmitteldurchströmten Komponenten aufweist. Gemäß einer bevorzugten Ausgestaltung weist das wenigstens eine Hüllelement zumindest im Bereich von Verbindungs- und/oder Anschlussstellen kühlmitteldurchströmter Leitungen transparente Sichtfenster zur Ermöglichung von Sichtkontrollen auf.

Gemäß einer weiteren Ausgestaltung der Erfindung weist das wenigstens eine Hüllelement einen Verschließmechanismus auf, welcher es ermöglicht, das Hüllelement den wenigstens einen Teil der weiteren kühlmitteldurchströmten Komponenten umgebend anzuordnen. Der Verschließmechanismus ist dabei vorzugsweise nach Art eines Reißverschlusses ausgestaltet, besonders bevorzugt als wasserdichter Reißverschluss, beispielsweise als zahnloser Reißverschluss. Der Verschließmechanismus erleichtert vorteilhafterweise die Montage des Hüllelementes um die kühlmitteldurchströmten Komponenten. Vorteilhafterweise ist zudem die Demontage, beispielsweise zur Reparatur oder zur Kontrolle der Funktion der von dem Hüllelement umgebenen Komponenten, erleichtert.

Eine weitere vorteilhafte Ausgestaltung der Erfindung sieht vor, dass der wenigstens eine Kühlkörper zusammen mit einer von dem Kühlkörper zu kühlenden Batterie und zumindest ein Teil der kühlmitteldurchströmten Komponenten in einem Gehäuse angeordnet sind, wobei der in dem Gehäuse befindliche Teil der kühlmitteldurchströmten Komponenten von dem wenigstens einem Hüllelement umgeben ist. Das Gehäuse kann insbesondere ein Batteriegehäuse oder der Einbauraum für eine zu temperierende Batterie in einem Fahrzeug sein. Vorteilhafterweise sind die Batterie sowie die peripheren elektronischen Komponenten der Batterie durch das Gehäuse sowie das wenigstens eine Hüllelement besonders gut vor austretendem Kühlmittel und/oder Kondenswasser geschützt. Insbesondere ist vorgesehen, dass eine zu temperierende Batterie mit dem hierfür vorgesehenen Kühlkörper in einem Batteriegehäuse angeordnet ist, wobei eine Leitung zum Zuführen von Kühlmittel zu dem Kühlkörper in das Gehäuse führt und eine Leitung zum Abführen von Kühlmittel von dem Kühlkörper aus dem Gehäuse führt, wobei die Leitung zum Zuführen von Kühlmittel innerhalb des Gehäuses vollständig von einem Hüllelement umgeben ist und die Leitung zum Abführen von Kühlmittel innerhalb des Gehäuses vollständig von demselben oder einem weiteren Hüllelement umgeben ist. Hierdurch sind die Batterie sowie periphere elektronische Komponenten der Batterie vorteilhafterweise verbessert vor austretendem Kühlmittel im Falle von Undichtigkeiten sowie vor an den Leitungen gebildetem Kondenswasser geschützt.

Weitere vorteilhafte Einzelheiten, Merkmale und Ausgestaltungsdetails der Erfindung werden im Zusammenhang mit den in den Figuren dargestellten Ausführungsbeispielen näher erläutert. Dabei zeigt:
- Fig. 1: in einer schematischen Darstellung ein Ausführungsbeispiel für ein erfindungsgemäßes Kühlsystem;
- Fig. 2: in einer schematischen Darstellung einen Ausschnitt des in Fig. 1 dargestellten Ausführungsbeispiels;
- Fig. 3: in einer schematischen Darstellung ein weiteres Ausführungsbeispiel für ein erfindungsgemäßes Kühlsystem; und
- Fig. 4: in einer schematischen Darstellung ein weiteres Ausführungsbeispiel für ein erfindungsgemäßes Kühlsystem.

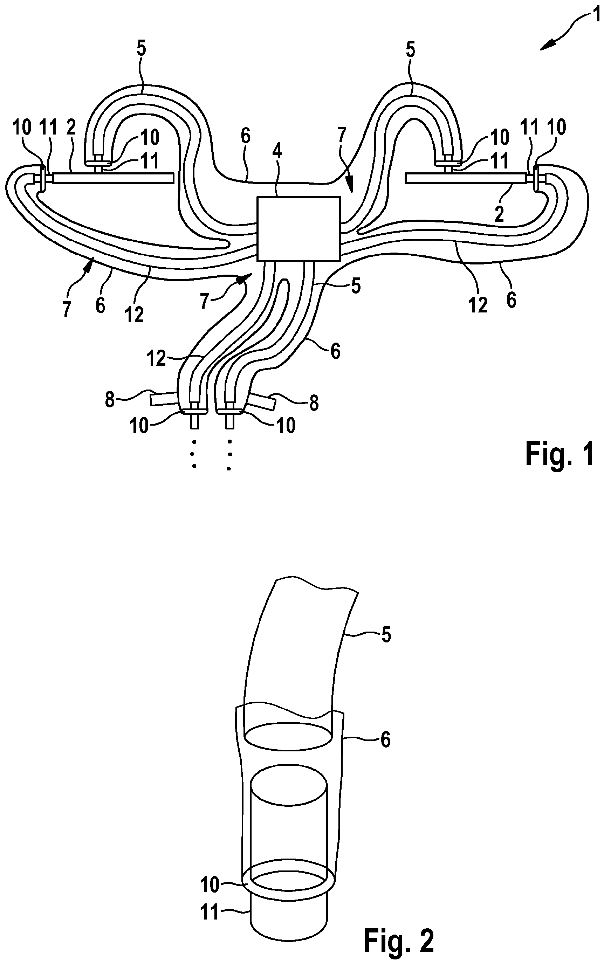

Bei den in Fig. 1, Fig. 3 und Fig. 4 dargestellten Ausführungsbeispielen ist aus Gründen der besseren Übersicht jeweils nur der Teil eines Kühlsystems dargestellt, der von einem Hüllelement umgebene Komponenten aufweist. Nicht dargestellte Komponenten, wie insbesondere eine Einrichtung zur Temperierung des Kühlmittels in einem Kühlmittelkreislauf sind auf im Stand der Technik bekannte Art und Weise auszugestalten.

Das in Fig. 1 dargestellte Kühlsystem 1 weist zwei kühlmitteldurchströmte Kühlkörper 2 zur Kühlung einer Batterie (in Fig. 1 nicht explizit dargestellt) auf.

Die Kühlkörper 2 sind dabei als metallische Kühlplatten ausgebildet, welche jeweils zwei Anschlussstutzen 11 aufweisen, über welche Kühlmittel zu- bzw. abgeführt werden kann. Als Kühlmittel kann beispielsweise ein Wasser-Glykol-Gemisch oder das Kältemittel R1234yf vorgesehen werden. Darüber hinaus weist das Kühlsystem 1 weitere kühlmitteldurchströmte Komponenten auf, insbesondere Leitungen 5 zum Zuführen von Kühlmittel zu den Kühlkörpern 2, Leitungen 12 zum Abführen von Kühlmittel von den Kühlkörpern 2 und als weitere kühlmitteldurchströmte Komponente einen zentralen Kühlmittelverteiler 4. Dem zentralen Kühlmittelverteiler 4 wird dabei Kühlmittel über eine Zuführleitung 5 zugeführt. Über weitere Zuleitungen 5 wird das Kühlmittel dann von dem Kühlmittelverteiler 4 den jeweiligen Kühlkörpern 11 zugeführt. Die von dem zentralen Kühlmittelverteiler 4 abgehenden Zuführleitungen 5 sind dabei mit den Kühlkörpern 2 verbunden, vorliegend über die in Fig. 1 auf den Kühlkörpern 2 angeordneten Anschlussstutzen 11. Über die weiteren in Fig. 1 seitlich an den Kühlkörpern 2 angeordneten Anschlussstutzen 11 wird das Kühlmittel, nachdem es den jeweiligen Kühlkörper 2 durchströmt hat, über die mit den Kühlkörpern 2 verbundenen Leitungen 12 zu dem zentralen Kühlmittelverteiler 4 geleitet und von diesem über eine weitere von dem zentralen Kühlmittelverteiler 4 abgehende Leitung 12 wieder dem Kühlmittelkreislauf zugeführt (der vollständige Kühlmittelkreislauf ist in Fig. 1 aus Gründen der besseren Übersicht nicht explizit dargestellt). Die in Fig. 1 dargestellten weiteren kühlmitteldurchströmten Komponenten des Kühlsystems 1, nämlich die Leitungen 5, die Leitungen 12 und der zentrale Kühlmittelverteiler 4 sind von einem Hüllelement 6 umgeben, derart, dass zwischen dem Hüllelement 6 und den weiteren kühlmitteldurchströmten Komponenten 5, 12 und 4 ein geschlossener Volumenraum 7 gebildet ist. Das Hüllelement 6 ist dabei flüssigkeitsundurchlässig ausgebildet und an seinen Enden jeweils mit einem Dichtmittel 10, beispielsweise einem Dichtring, an den Leitungen 5 und 12 beziehungsweise den Anschlussstutzen 11 luftdicht und flüssigkeitsundurchlässig angeordnet. Das Hüllelement 6 verhindert somit, dass Kühlmittel im Fall einer Undichtigkeit des Kühlsystems 1 im Bereich der von dem Hüllelement 6 umgebenen weiteren kühlmitteldurchströmten Komponenten des Kühlsystems 1 aus dem Hüllelement 6 austritt. Das Kühlsystem 1 mit dem Hüllelement 6 schützt somit die zu kühlende Batterie sowie gegebenenfalls weitere periphere Elektronikkomponenten vor Beschädigungen durch Kühlmittel. Das Hüllelement 6 besteht dabei vorliegend aus elastischen Kunststoffen, wobei die Innen- und Außenfläche des Hüllelementes 6 jeweils mit einer Wärme reflektierenden Schicht bedampft ist (in Fig. 1 nicht explizit dargestellt). Ausgenommen hiervon sind die Bereiche, in denen das Hüllelement 6 mit den Leitungen 5 und 12 beziehungsweise den Anschlussstutzen 11 verbunden ist. In diesen Bereichen ist das Hüllelement 6 transparent ausgebildet, derart, dass das Kühlsystem 1 in diesen Verbindungsbereichen auf Undichtigkeiten durch einfache Sichtkontrolle überprüft werden kann, insbesondere ohne das Hüllelement 6 hierzu entfernen zu müssen.

Bei dem in Fig. 1 dargestellten Kühlsystem 1 ist das Hüllelement 6 mit Luft befüllt, wodurch das Hüllelement 6 verbessert thermisch isolierend wirkt, sodass eine Wärmeabgabe von Kühlmittel abführenden Komponenten 12 und eine Wärmeaufnahme von Kühlmittel zuführenden Komponenten 5 reduziert ist. Das Befüllen des Hüllelementes 6 mit Luft erfolgt dabei über eine in Fig. 1 nicht explizit dargestellte Befüllöffnung. Das Hüllelement 6 weist ferner zwei schlauchartig ausgebildete Ablassöffnungen 8 zum Ablassen von innerhalb des Volumenraums 7 angesammelter Flüssigkeit auf. Die Ablassöffnungen 8 weisen dabei vorliegend jeweils ein Verschlusselement (in Fig. 1 nicht explizit dargestellt) auf, welches zum Ablassen von in dem Volumenraum 7 angesammelter Flüssigkeit geöffnet werden muss. Gemäß einer nicht dargestellten Ausgestaltungsvariante sind die Ablassöffnungen 8 derart angeordnet, dass ein Ablassen von Flüssigkeit gerichtet erfolgen kann, wobei die Ablassöffnungen mittels schlauchartiger Fortsätze derart geführt sind, dass über die Ablassöffnung aus dem Volumenraum 7 austretende Flüssigkeit weder die Batterie noch sonstige elektronische Komponenten schädigen kann.

Fig. 2 zeigt einen vergrößerten Ausschnitt des in Fig. 1 dargestellten Ausführungsbeispiels, wobei ein an einem Kühlkörper 2 angeordneter Anschlussstutzen 11 dargestellt ist, über den Kühlmittel zu einem Kühlkörper 2 zugeführt werden kann. Der Anschlussstutzen 11 ist dabei rohrartig ausgebildet, wobei eine Zuleitung 5 (oder eine Ableitung 12) zur Befestigung an dem Kühlkörper 2 über den Anschlussstutzen 11 gestülpt werden kann, wobei die Zuleitung vorteilhafterweise elastisch ausgebildet und kraftschlüssig mit dem Anschlussstutzen 11 verbindbar ist. Das Hüllelement 6 (in Fig. 2 ebenfalls nur ausschnittsweise dargestellt) ist ebenfalls an dem Anschlussstutzen 11 mittels eines Dichtrings 10 luftdicht und flüssigkeitsundurchlässig angeordnet, vorzugsweise derart, dass das Ende der Zuleitung 5 von dem Hüllelement 6 umgeben ist.

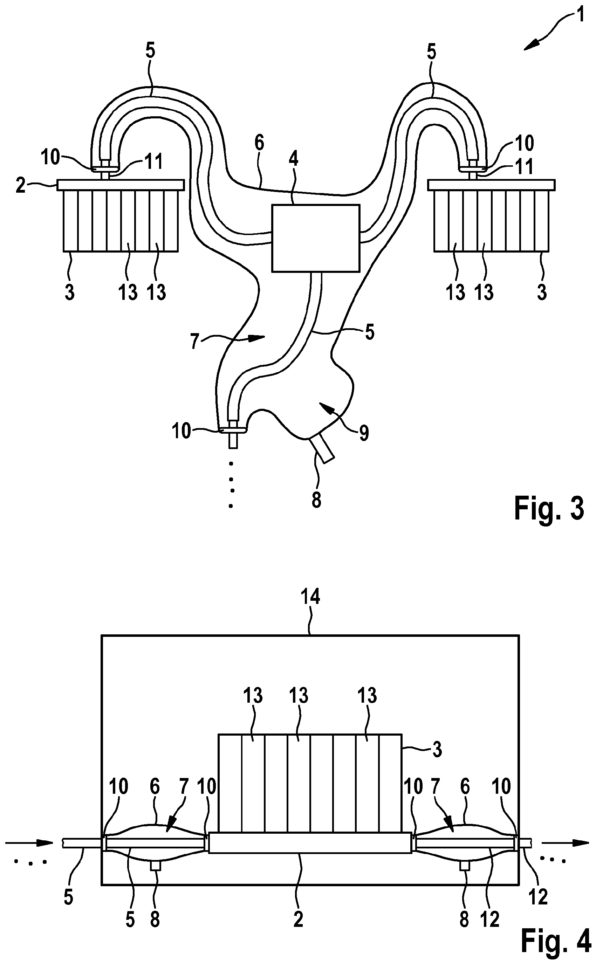

Fig. 3 zeigt ein weiteres Ausführungsbeispiel für ein erfindungsgemäßes Kühlsystem 1. Dieses weist zwei kühlmitteldurchströmte Kühlkörper 2 zur Kühlung einer Batterie 3 auf. Die Batterie 3 ist vorliegend als Energiequelle für den Antrieb von Elektrofahrzeugen ausgebildet und weist eine Vielzahl von miteinander verschalteten Batteriezellen 13 auf. Das Kühlsystem 1 umfasst ferner Leitungen 5 zum Zuführen von Kühlmittel zu den Kühlkörpern 11, Leitungen zum Abführen von Kühlmittel von den Kühlkörpern 2 (aus Gründen der besseren Übersicht sind die Leitungen zum Abführen des Kühlmittels von den kühlmitteldurchströmten Kühlkörpern 2 in Fig. 3 nicht explizit dargestellt) sowie einen zentralen Sammler 4, von dem zugeführtes Kühlmittel an die jeweiligen Kühlkörper 2 weitergeleitet wird und dem abzuführendes Kühlmittel von den Kühlkörpern 2 zunächst zugeführt wird, um es dann von dem zentralen Sammler 4 zentral abzuleiten. Die Leitungen 5 zum Zu- beziehungsweise Abführen von Kühlmittel sowie der zentrale Sammler 4 sind von einem flüssigkeitsundurchlässigen Hüllelement 6 umgeben und zwar derart, dass zwischen dem Hüllelement 6 und den von dem Hüllelement 6 umgebenen Komponenten 4, 5 ein geschlossener Volumenraum 7 gebildet ist. Das Hüllelement 6 ist dabei derart ausgebildet, dass das Hüllelement 6 einen Volumenraumbereich 9 zum Auffangen und Sammeln von Flüssigkeit, insbesondere von an den Leitungen gebildetem Kondenswasser und/oder aufgrund von Undichtigkeiten entwichenem Kühlmittel, ausbildet. Das Hüllelement 6 weist dabei in dem Volumenraumbereich 9 einen Feuchtesensor auf (in Fig. 3 nicht explizit dargestellt), welcher ausgebildet ist, Feuchtigkeit in dem Volumenraumbereich 9 zu detektieren und ein Detektionssignal an eine Steuereinrichtung (in Fig. 3 nicht explizit dargestellt) zu senden. Von dieser Steuereinrichtung kann dann eine Signalisierung erfolgen, welche darauf hinweist, dass sich in dem Volumenraum 7 Flüssigkeit befindet. Über ein Ventil 8 kann die Flüssigkeit dann aus dem Volumenraum 7 entfernt werden. Über das Ventil 8 ist das Hüllelement 6 zudem mit Gas, insbesondere mit Luft, befüllbar, wobei das Hüllelement 6 durch das Gas von den umgebenden kühlmitteldurchströmten Komponenten 4, 5 beabstandet ist.

In Fig. 4 ist ein weiteres Ausführungsbeispiel für ein erfindungsgemäßes Kühlsystem 1 dargestellt. Dabei ist ein Kühlkörper 2 zusammen mit einer von dem Kühlkörper zu kühlenden Batterie 3, welche eine Mehrzahl von miteinander verschalteten Batteriezellen 13 aufweist, und einer Leitung 5 zum Zuführen eines Kühlmittels zu dem Kühlkörper 2 sowie einer Leitung 12 zum Abführen eines Kühlmittels von dem Kühlkörper 2 als Teil weiterer kühlmitteldurchströmter Komponenten in einem Batteriegehäuse 14 angeordnet. Der in dem Batteriegehäuse 14 befindliche Teil der weiteren kühlmitteldurchströmten Komponenten, nämlich die Leitung 5 und die Leitung 12, sind jeweils von einem Hüllelement 6 umgeben. Die Hüllelemente 6 werden dabei jeweils von einem Innengerüst aufgespannt (in Fig. 4 nicht explizit dargestellt), wobei das Innengerüst die Hüllelemente 6 jeweils von der Leitung 5 bzw. der Leitung 12 beabstandet, beispielsweise mittels radial an der Leitung 5 beziehungsweise der Leitung 12 angeordneten Querstreben. Die Hüllelemente 6 sind jeweils an ihren Enden mit Abdichtelementen 10 an den Leitungen 5 bzw. 12 angeordnet. Insbesondere ist aber auch eine Anordnung an entsprechenden Anschlussstutzen (in Fig. 4 nicht explizit dargestellt) vorgesehen, wie beispielsweise im Zusammenhang mit Fig. 2 erläutert. Die Hüllelemente 6 weisen jeweils einen zahnlosen wasserdichten Reißverschluss (in Fig. 4 nicht explizit dargestellt) als Verschließmechanismus auf. Der Reißverschluss ermöglicht dabei ein Öffnen beziehungsweise Schließen des jeweiligen Hüllelementes 6 in seiner Längserstreckungsrichtung, wobei das Hüllelement 6 in geöffnetem Zustand um die Leitung 5 beziehungsweise 12 angeordnet werden kann und der Volumenraum 7 zwischen Hüllelement 6 und der von dem Hüllelement 6 umgebenen Leitung 5 beziehungsweise 12 durch Schließen des Reißverschlusses und Fixierung der Enden des jeweiligen Hüllelementes 6 mittels der Abdichtelemente 10 gebildet wird. Die Hüllelemente 6 weisen jeweils ein Ventil 8 auf, welches geöffnet werden kann, um in dem Volumenraum 7 befindliche Flüssigkeit aus dem Volumenraum 7 ablassen zu können. Die Ventile 8 weisen dabei jeweils an der in den Volumenraum 7 gerichteten Seite einen Feuchtesensor zur Detektion von Flüssigkeit auf, welcher ausgebildet ist, bei einer Flüssigkeitsansammlung in dem Volumenraum 7 ein Detektionssignal an eine Steuereinrichtung (in Fig. 4 nicht explizit dargestellt) zu übertragen, wobei die Steuereinrichtung vorteilhafterweise ein Warn- bzw. Hinweissignal generiert, sodass ein Servicepersonal die von den Hüllelementen 6 umgebenen kühlmitteldurchströmten Komponenten 5, 12 überprüfen sowie gegebenenfalls Flüssigkeit aus den Volumenräumen 7 über die Ventile 8 ablassen kann.

Die in den Figuren dargestellten und im Zusammenhang mit diesen erläuterten Ausführungsbeispiele, dienen der Erläuterung und sind für diese nicht beschränkend.

## Patentansprüche

1. Kühlsystem (1) mit wenigstens einem kühlmitteldurchströmten Kühlkörper (2) zur Kühlung einer Batterie (3), insbesondere zur Kühlung einer als Energiequelle für den Antrieb von Hybrid-, Plug-In-Hybrid- oder Elektrofahrzeugen ausgebildeten Batterie, und mit weiteren kühlmitteldurchströmten Komponenten (4, 5, 12) umfassend wenigstens eine Leitung (5) zum Zuführen von Kühlmittel zu dem wenigstens einen Kühlkörper (2) und wenigstens eine Leitung (12) zum Abführen von Kühlmittel von dem wenigstens einen Kühlkörper (2), wobei wenigstens ein Teil der weiteren kühlmitteldurchströmten Komponenten (4, 5, 12) zumindest teilweise von wenigstens einem Hüllelement (6) umgeben ist, derart, dass zwischen dem wenigstens einen Hüllelement (6) und dem wenigstens einen Teil der weiteren kühlmitteldurchströmten Komponenten (4, 5, 12) ein geschlossener Volumenraum (7) gebildet ist, **dadurch gekennzeichnet, dass** das Hüllelement (6) als Kunststofffolie ausgebildet ist.

2. Kühlsystem (1) nach Anspruch 1, **dadurch gekennzeichnet, dass** die wenigstens eine Leitung (5) zum Zuführen von Kühlmittel zu dem wenigstens einen Kühlkörper (2) und/oder die wenigstens eine Leitung (12) zum Abführen von Kühlmittel von dem wenigstens einen Kühlkörper (2) zumindest abschnittsweise von dem wenigstens einen Hüllelement (6) umgeben ist.

3. Kühlsystem (1) nach einem der vorhergehenden Ansprüche, **dadurch gekennzeichnet, dass** das wenigstens eine Hüllelement (6) thermisch isolierend ausgebildet ist.

4. Kühlsystem (1) nach einem der vorhergehenden Ansprüche, **dadurch gekennzeichnet, dass** das wenigstens eine Hüllelement (6) wenigstens eine Ablassöffnung (8) zum Ablassen von innerhalb des Volumenraumes (7) befindlicher Flüssigkeit aufweist.

5. Kühlsystem (1) nach einem der vorhergehenden Ansprüche, **dadurch gekennzeichnet, dass** das wenigstens eine Hüllelement (6) ein Mittel zur Detektion von Feuchtigkeit innerhalb des Volumenraumes (7) aufweist.

6. Kühlsystem (1) nach einem der vorhergehenden Ansprüche, **dadurch gekennzeichnet, dass** das wenigstens eine Hüllelement (6) ein Innengerüst aufweist, welches das Hüllelement (6) von dem von dem Hüllelement (6) umgebenen Teil der weiteren kühlmitteldurchströmten Komponenten (4, 5, 12) beabstandet.

7. Kühlsystem (1) nach einem der vorhergehenden Ansprüche, **dadurch gekennzeichnet, dass** das wenigstens eine Hüllelement (6) gasdicht ausgebildet ist, derart, dass das wenigstens eine Hüllelement (6) mit Gas befüllbar ist, wobei das mit Gas befüllte wenigstens eine Hüllelement (6) von dem wenigstens einen Teil der weiteren kühlmitteldurchströmten Komponenten (4, 5, 12) beabstandet ist.

8. Kühlsystem (1) nach einem der vorhergehenden Ansprüche, **dadurch gekennzeichnet, dass** das wenigstens eine Hüllelement (6) zumindest teilweise transparent ausgebildet ist, derart, dass der wenigstens eine von dem wenigstens einen Hüllelement (6) umgebene Teil der weiteren kühlmitteldurchströmten Komponenten (4, 5, 12) zumindest teilweise sichtbar ist.

9. Kühlsystem (1) nach einem der vorhergehenden Ansprüche, **dadurch gekennzeichnet, dass** das wenigstens eine Hüllelement (6) einen Verschließmechanismus aufweist, welcher es ermöglicht, das Hüllelement (6) den wenigstens einen Teil der weiteren kühlmitteldurchströmten Komponenten (4, 5, 12) umgebend anzuordnen.

10. Kühlsystem (1) nach einem der vorhergehenden Ansprüche, **dadurch gekennzeichnet, dass** der wenigstens eine Kühlkörper (2) zusammen mit einer von dem Kühlkörper (2) zu kühlenden Batterie (3) und zumindest einem Teil der weiteren kühlmitteldurchströmten Komponenten (4, 5, 12) in einem Gehäuse (14) angeordnet sind, wobei der in dem Gehäuse (14) befindliche Teil der weiteren kühlmitteldurchströmten Komponenten (4, 5, 12) von dem wenigstens einen Hüllelement (6) umgeben ist.

## Claims

1. Cooling system (1) having at least one cooling element (2), through which coolant flows, for cooling a battery (3), in particular for cooling a battery which is configured as an energy source for the drive of hybrid, plug-in hybrid or electric vehicles, and having further components (4, 5, 12), through which coolant flows, comprising at least one line (5) for feeding coolant to the at least one cooling element (2) and at least one line (12) for discharging coolant from the at least one cooling element (2), at least one part of the further components (4, 5, 12), through which coolant flows, being surrounded at least partially by at least one encasing element (6) in such a way that a closed volumetric space (7) is formed between the at least one encasing element (6) and the at least one part of the further components (4, 5, 12), through which coolant flows, **characterized in that** the encasing element (6) is configured as a plastic film.

2. Cooling system (1) according to Claim 1, **characterized in that** the at least one line (5) for feeding coolant to the at least one cooling element (2) and/or the at least one line (12) for discharging coolant from the at least one cooling element (2) are/is surrounded at least in sections by the at least one encasing element (6).

3. Cooling system (1) according to either of the preceding claims, **characterized in that** the at least one encasing element (6) is of thermally insulating configuration.

4. Cooling system (1) according to one of the preceding claims, **characterized in that** the at least one encasing element (6) has at least one outlet opening (8) for discharging liquid which is situated within the volumetric space (7).

5. Cooling system (1) according to one of the preceding claims, **characterized in that** the at least one encasing element (6) has a means for detecting moisture within the volumetric space (7).

6. Cooling system (1) according to one of the preceding claims, **characterized in that** the at least one encasing element (6) has an inner frame which spaces the encasing element (6) apart from that part of the further components (4, 5, 12), through which coolant flows, which part is surrounded by the encasing element (6).

7. Cooling system (1) according to one of the preceding claims, **characterized in that** the at least one encasing element (6) is of gas-tight configuration in such a way that the at least one encasing element (6) can be filled with gas, the at least one encasing element (6) which is filled with gas being spaced apart from the at least one part of the further components (4, 5, 12), through which coolant flows.

8. Cooling system (1) according to one of the preceding claims, **characterized in that** the at least one encasing element (6) is of at least partially transparent configuration in such a way that the at least one part of the further components (4, 5, 12), through which coolant flows, which part is surrounded by the at least one encasing element (6), is at least partially visible.

9. Cooling system (1) according to one of the preceding claims, **characterized in that** the at least one encasing element (6) has a closure mechanism which makes it possible to arrange the encasing element (6) so as to surround the at least one part of the further components (4, 5, 12), through which coolant flows.

10. Cooling system (1) according to one of the preceding claims, **characterized in that** the at least one cooling body (2) is arranged in a housing (14) together with a battery (3) to be cooled by the cooling body (2) and at least one part of the further components (4, 5, 12), through which coolant flows, that part of the further components (4, 5, 12), through which coolant flows, which part is situated in the housing (14), being surrounded by the at least one encasing element (6).

## Revendications

1. Système de refroidissement (1) présentant
au moins un corps de refroidissement (2) traversé par un fluide de refroidissement et destiné à refroidir une batterie (3), notamment à refroidir une batterie configurée comme source d'énergie pour l'entraînement de véhicules hybrides, hybrides dits "plug-in" ou électriques et
d'autres composants (4, 5, 12) traversés par un fluide de refroidissement, comprenant au moins un conduit (5) qui amène un fluide de refroidissement vers le ou les corps de refroidissement (2) et au moins un conduit (12) qui évacue le fluide de refroidissement du ou des corps de refroidissement (2),
au moins une partie des autres composants (4, 5, 12) traversés par le fluide de refroidissement étant entourée au moins en partie par au moins un élément d'enveloppe (6) de manière à former un volume (7) fermé entre le ou les éléments d'enveloppe (6) et la ou les parties des autres composants (4, 5, 12) traversés par le fluide de refroidissement,
**caractérisé en ce que**
l'élément d'enveloppe (6) est configuré sous la forme d'une feuille de matière synthétique.

2. Système de refroidissement (1) selon la revendication 1, **caractérisé en ce que** le ou les conduits (5) d'amenée de fluide de refroidissement vers le ou les corps de refroidissement (2) et/ou le ou les conduits (12) d'évacuation du fluide de refroidissement du ou des corps de refroidissement (2) sont entourés au moins par section par le ou les éléments d'enveloppe (6).

3. Système de refroidissement (1) selon l'une des revendications précédentes, **caractérisé en ce que** le ou les éléments d'enveloppe (6) sont thermiquement isolants.

4. Système de refroidissement (1) selon l'une des revendications précédentes, **caractérisé en ce que** le ou les éléments d'enveloppe (6) présentent au moins une ouverture d'échappement (8) qui permet l'échappement de liquide présent à l'intérieur du volume (7).

5. Système de refroidissement (1) selon l'une des revendications précédentes, **caractérisé en ce que** le ou les éléments d'enveloppe (6) présentent un moyen de détection de l'humidité présente à l'intérieur du volume (7).

6. Système de refroidissement (1) selon l'une des revendications précédentes, **caractérisé en ce que** le ou les éléments d'enveloppe (6) présentent un treillis intérieur qui maintient à distance l'élément d'enveloppe (6) de la partie des autres composants (4, 5, 12) traversée par le fluide de refroidissement et entourée par l'élément d'enveloppe (6).

7. Système de refroidissement (1) selon l'une des revendications précédentes, **caractérisé en ce que** le ou les éléments d'enveloppe (6) sont étanches aux gaz de telle sorte que le ou les éléments d'enveloppe (6) puissent être remplis de gaz, le ou les éléments d'enveloppe (6) remplis de gaz étant maintenus à distance de la ou des parties des autres composants (4, 5, 12) traversées par le fluide de refroidissement.

8. Système de refroidissement (1) selon l'une des revendications précédentes, **caractérisé en ce que** le ou les éléments d'enveloppe (6) sont est au moins en partie transparent de telle sorte que la partie des autres composants (4, 5, 12) traversée par le fluide de refroidissement et entourée par le ou les éléments d'enveloppe (6) soit au moins partiellement visible.

9. Système de refroidissement (1) selon l'une des revendications précédentes, **caractérisé en ce que** le ou les éléments d'enveloppe (6) présentent un mécanisme de fermeture qui permet de placer l'élément d'enveloppe (6) autour de la ou des parties des autres composants (4, 5, 12) traversées par le fluide de refroidissement.

10. Système de refroidissement (1) selon l'une des revendications précédentes, **caractérisé en ce que** le ou les corps de refroidissement (2) sont disposés dans un boîtier (14) en même temps qu'une batterie (3) que le corps de refroidissement (2) doit refroidir et qu'au moins une partie des autres composants (4, 5, 12) traversés par le fluide de refroidissement, la partie des autres composants (4, 5, 12) traversés par le fluide de refroidissement qui est située dans le boîtier (14) étant entourée par le ou les éléments d'enveloppe (6).
